# EUROPÄISCHE PATENTSCHRIFT

(11) **EP 4 268 605 B1**
(45) Veröffentlichungstag und Bekanntmachung des Hinweises auf die Patenterteilung: **12.11.2025**
(21) Anmeldenummer: 23169442.3
(22) Anmeldetag: 24.04.2023
(51) Int. Cl.: A23B 11/00, A23B 11/10

(54) **VERTEILERKOPF FÜR DAMPF-INFUSIONSBEHÄLTER UND DAMPF-INFUSIONSSYSTEM**
STEAM INFUSION CONTAINER DISTRIBUTION HEAD AND STEAM INFUSION SYSTEM
TÊTE DE DISTRIBUTION POUR RÉCIPIENT DE PERFUSION DE VAPEUR ET SYSTÈME DE PERFUSION DE VAPEUR

(30) Priorität: 25.04.2022 DE 102022109907
(43) Veröffentlichungstag der Anmeldung: 01.11.2023
(73) Patentinhaber: KRONES Aktiengesellschaft, 93073 Neutraubling (DE)
(72) Erfinder: Oehmichen, Thomas, 93073 Neutraubling (DE); Justl, Florian, 93073 Neutraubling (DE); Hoeller, Stefan, 93073 Neutraubling (DE); Runge, Torsten, 93073 Neutraubling (DE)
(74) Vertreter: Grünecker Patent- und Rechtsanwälte PartG mbB

(56) Entgegenhaltungen:
- WO-A1-2021/023358
- DE-U1- 20 111 775
- US-A- 5 558 819
- US-A1- 2018 161 796

## Beschreibung

Die Erfindung bezieht sich auf einen Verteilerkopf zum Einbringen eines Produktes in einen Dampf-Infusionsbehälter, auf ein Dampf-Infusionssystem, das einen solchen Dampf-Infusionsbehälter umfasst, ein System zur Ultrahocherhitzung eines flüssigen Produktes sowie ein Verfahren zum Erhitzen eines flüssigen Produktes.

Es ist bekannt, flüssige Produkte, insbesondere flüssige Lebensmittelprodukte wie beispielsweise Milch, Joghurt, Saft oder Ähnliches durch Erhitzen haltbar zu machen. Dafür können sie insbesondere durch Dampf-Infusion in einem Dampf-Infusionsbehälter mit Überdruck direkt durch Dampf erhitzt werden. "Direkt" kann in diesem Zusammenhang insbesondere bedeuten, dass das Produkt durch direkten Kontakt bzw. Wärmetausch mit Dampf erhitzt wird.

Beispielsweise kann das Produkt als Produktstrahl im oberen Bereich des Dampf-Infusionsbehälters zugeführt werden und, während es sich senkrecht nach unten durch den Dampf-Infusionsbehälter bewegt, dort mit heißen, bevorzugt gesättigten, Dampf, beispielsweise zwischen 120°C und 160°C heißem Dampf, erhitzt werden. Während der Zeit, in der der Produktstrahl senkrecht durch den Dampf-Infusionsbehälter fällt, kann der Produktstrahl auf die gewünschte Temperatur für die gewünschte Dauer erhitzt werden. Anschließend wird das fertig erhitzte Produkt in einem, oft konisch ausgebildeten Bereich des Infusionsbehälters am unteren Ende des Infusionsbehälters aufgefangen. Der, insbesondere konisch, ausgebildete Bereich des Infusionsbehälters am unteren Ende des Infusionsbehälters kann optional gekühlt werden, um ein Anbacken des Produktes an den Wänden zu verhindern oder zu verringern. Ein Dampfinfusionssystem für die Wärmebehandlung von flüssigen und halbflüssigen Lebensmitteln, wie z.B. Milchprodukten, bei dem die Wärmezufuhr durch ein einziges Ventil gesteuert wird, das den Dampfstrom in die Infusionskammer regelt, ist in WO 2021/023351 A1 offenbart.

Ein Produktstrahl kann aus einem durchgehenden Strahl oder aus mehreren Teilstrahlen gebildet sein. Verteilerköpfe zum Erzeugen eines solchen Produktstrahles in einem Infusionsbehälter sind beispielsweise aus der EP 1 536 702 B1 oder der DE 69 209 097 T2 bekannt. Bei solchen Verteilerköpfen zum Erzeugen eines Produktstrahls wird der Produktstrahl jedoch von außen durch Dampf umschlossen und beaufschlagt. Dabei kann es zu einer Ausbreitung des Produktstrahls radial nach außen kommen, so dass die zylindrischen Wandbereiche im mittleren und unteren Bereich des Infusionsbehälters durch das Produkt berührt werden können. Dies kann insbesondere zu unerwünschten Ablagerungen und/oder Fouling führen, was den Geschmack des Produktes beeinflussen kann und eine häufige Reinigung des Infusionsbehälters notwendig machen kann. Zudem steht in dieser Anordnung im Zentrum des Produktstrahls weniger Dampf zum Erhitzen des Produktes zur Verfügung als in den außenliegenden Bereichen. Somit kann es zu einer unzureichenden Erhitzung des Produktes im Inneren kommen oder eine Dampftemperaturerhöhung notwendig sein, um eine ausreichende Erhitzung des Produkts im Inneren zu erreichen. Eine solche Erhöhung der Temperatur, die im Außenbereich nicht notwendig wäre, kann sich aber nachteilig auf die Produktqualität, insbesondere den Geschmack, auswirken sowie energetisch nachteilig sein.

Die EP 2 381 793 B1 und die EP 3 772 284 A1 offenbaren beide Verteilerköpfe zum Zuführen eines Produktes in einen Behälter, die den Produktstrahl ringförmig zuführen, wobei im Innenraum des Produktstrahls ebenfalls Dampf zugeführt werden kann. Um dies zu ermöglichen, ist in der EP 3 772 284 A1 der Verteilerkopf hängend im Infusionsbehälter angeordnet. Als nachteilig erweist sich an dieser Gestaltung, dass das Produkt bei der Förderung durch den Verteiler aufgeheizt wird und dieser daher intensiv gekühlt und häufig gereinigt werden muss. Darüber hinaus ist die Dampfzuführung in den Innenraum aufgrund der nicht zwangsgeführten Dampfströmung und der geringen Querschnittsfläche des Innenraums limitiert. In der EP 2 381 793 B1 werden separate Dampfanschlüsse zur Zuführung des Dampfes benötigt.

Der Erfindung liegt nun die Aufgabe zu Grunde, eines oder mehrere der oben genannten Probleme zu lösen. Die Erfindung umfasst einen Verteilerkopf zum Einbringen eines flüssigen Produktes nach Anspruch 1 sowie ein Dampf-Infusionssystem nach Anspruch 13, ein System zur Ultrahocherhitzung eines flüssigen Produktes nach Anspruch 14 und ein Verfahren zum Erhitzen eines flüssigen Produktes nach Anspruch 15. Weitere Ausführungsformen sind in den abhängigen Ansprüchen beschrieben.

Ein Verteilerkopf zum Einbringen eines flüssigen Produktes, insbesondere eines flüssigen Lebensmittelproduktes, wie beispielsweise Milch, Joghurt, Saft, Milchersatzprodukten oder Ähnlichem, ist ausgebildet zum Einbringen eines flüssigen Produktes in Form eines, insbesondere aus Teilstrahlen zusammengesetzten, Produktstrahls.

Der Verteilerkopf umfasst im Bereich der einen oder mehreren Öffnungen mindestens einen öffnungsfreien Bereich, der so angeordnet und oder ausgebildet ist, dass ein Produktstrahl gebildet wird, der einen Dampfeintritt in das Innere des Produktstrahls senkrecht zur Bewegungsrichtung des Produktstrahls ermöglicht. Insbesondere kann somit Dampf von außen in das Innere des Produktstrahls eintreten und sich dabei senkrecht zur Bewegungsrichtung des Produktstrahls bewegen. Es ist also insbesondere nicht notwendig, Dampf durch einen separaten Anschluss oder über die Produktdüse von oben in das Produkt einzuleiten, sondern Dampf kann seitlich in den Produktstrahl eintreten.

Der Verteilerkopf ist zum Einbringen eines Produktes in einen Dampf-Infusionsbehälter ausgebildet. Ein Dampf-Infusionsbehälter, für den der Verteilerkopf ausgebildet ist, kann insbesondere ein zuvor beschriebener Dampf-Infusionsbehälter oder ein in EP 3 171 701 B1, Figur 2, beschriebener Dampf-Infusionsbehälter sein. Der Dampf-Infusionsbehälter kann dazu ausgebildet sein, dass von oben ein Produkt in Form eines Produktstrahls eingeführt wird und seitlich Dampf zugeführt wird. Typischerweise können dabei das Produkt und der Dampf unter Druck, z.B. zwischen 2 Bar und 6,2 Bar, z.B. zwischen 2,7 Bar und 4,8 Bar, z.B. 3,6 Bar, stehen, so dass im Dampf-Infusionsbehälter Temperaturen von etwa zwischen 120°C und 160°C, z.B. zwischen 130°C bis 150°C, z.B. 140°C erreicht werden können. Das Produkt kann bei seiner Zuführung in den Dampf-Infusionsbehälter bereits erwärmt sein, beispielsweise eine Temperatur von zwischen 70°C und 90 °C, z.B. ca. 80°C, aufweisen. Das in den Dampf-Infusionsbehälter eingeführte Produkt kann sich dann als Produktstrahl entlang dem, insbesondere zylindrischen, Körper des Dampf-Infusionsbehälters bewegen, insbesondere senkrecht nach unten, und dabei durch den Dampf erwärmt werden in der Zeit, in der es sich durch den, insbesondere zylindrischen, Körper des Dampf-Infusionsbehälters bewegt. Im unteren Bereich des Dampf-Infusionsbehälters kann das Produkt, insbesondere durch einen konischen Bereich, aufgefangen werden. Dieser, insbesondere konische, Bereich kann optional gekühlt sein, z.B. auf eine Temperatur von zwischen 100°C und 140°C, beispielsweise zwischen 110°C und 130°C, z.B. 120°C

Der Verteilerkopf umfasst ein oder mehr Öffnungen zum Einbringen des Produkts, die typischerweise so angeordnet sind, dass der Produktstrahl in eine Richtung austritt, die, insbesondere bei Verwendung des Verteilerkopfes in einem Dampf-Infusionsbehälter, senkrecht nach unten angeordnet sein kann. Insbesondere kann der Verteilerkopf so ausgebildet sein, dass alle Teilstrahlen des Produktstrahls parallel zueinander in eine Richtung austreten. Diese Richtung wird als die Richtung des Produktstrahls bezeichnet.

Der Verteilerkopf kann optional eine oder mehrere Anschlussmöglichkeiten für eine Produktzuführung, z.B. für ein Rohr, umfassen und/oder eine oder mehrere Produktzuführungen, z.B. ein oder mehrere Rohre, umfassen. Er kann des Weiteren optional eine Aufweitvorrichtung zwischen Produktzuführung und Öffnungen zum Einbringen des Produkts, z.B. eine Kammer, umfassen. Dort kann insbesondere ein durch ein Rohr zum Verteilerkopf hingeführter Produktstrom auf die durch die Öffnungen zum Einbringen des Produkts des Verteilerkopfes vorgegebene Produktstrahlbreite aufgeweitet werden. Der Verteilerkopf kann einen Abschluss mit den Öffnungen, z.B. eine gerade oder gebogene Platte mit den Öffnungen für den Produktstrahl, umfassen. In der optionalen Aufweitvorrichtung kann sich das Produkt sammeln, bevor es durch die Öffnungen für den Produktstrahl, z.B. in einer geraden oder gebogen Platte, den Verteilerkopf verlassen kann. Der Verteilerkopf, insbesondere der Abschluss mit den Öffnungen, die optionale Aufweitvorrichtung und die optionale Anschlussmöglichkeit für den Produktstrahl oder die Produktzuführung können einstückig oder mehrstückig, ausgebildet sein. Insbesondere kann der Abschluss mit den Öffnungen einstückig oder mehrstückig, z.B. aus verschiedenen Materialien, die miteinander verbunden sein können, oder mehrstückig aus dem gleichen Material, das durch ein weiteres Material oder andere Befestigungsmittel miteinander verbunden sein kann, ausgebildet sein.

Die Öffnungen zum Einbringen des Produktes können insbesondere flächig angeordnet sein, also bei Projektion auf eine Ebene senkrecht zum Produktstrahl kann die Anordnung, insbesondere das durch die Öffnungen erzeugte Muster oder die Form der Öffnung(en) selber, eine Ausdehnung in zwei Richtungen senkrecht zueinander aufweisen. Insbesondere kann eine solche flächige Anordnung der Öffnungen zum Einbringen des Produktes eine Anordnung in einer Ebene oder auf einer gekrümmten Fläche sein. Beispielsweise kann bei einem rundem, insbesondere kreisförmigen, Verteilerkopf die Anordnung in einem Bereich entlang des Kreisumfangs angeordnet sein, und somit eine Ausdehnung in zwei Richtungen senkrecht zueinander aufweisen.

Durch den mindestens einen öffnungsfreien Bereich im Bereich der ein oder mehreren Öffnungen entsteht mindestens ein nicht produktführender Bereich im Produktstrahl. Durch diesen mindestens einen nicht produktführenden Bereich kann es insbesondere zu mindestens einer Öffnung im Produktstrahl kommen, in dem kein Produkt geführt wird.

Dieser mindestens eine öffnungsfreie Bereich kann beispielsweise durch ein Fehlen von Öffnungen in dem Abschluss mit Öffnungen, z.B. in einer (geraden oder gebogenen) Platte, ausgebildet sein oder durch einen Verschluss ursprünglich vorhandener Öffnungen in dem Abschluss gebildet sein.

Der Verteilerkopf insbesondere im Bereich der einen oder mehreren Öffnungen, insbesondere sein Abschluss, kann aus einer zusammenhängenden Platte, z.B. einer geraden oder gebogenen, ausgebildet sein. In anderen Ausführungsformen kann der Verteilerkopf im Bereich der einen oder mehreren Öffnungen, insbesondere sein Abschluss, aus mehreren separaten Teilbereichen, beispielsweise gebogenen Platten, zusammengesetzt sein, die miteinander verbunden oder separat sein können.

Der Produktstrahl wird, wenn man ihn in einer Ebene senkrecht zu seiner Bewegungsrichtung betrachtet, durch die kleinste konvexe geometrische Figur begrenzt, die alle Teile des Produktstrahls umfasst. Diese Figur kann insbesondere der kleinsten konvexen geometrischen Figur entsprechen, die alle Projektionen von Öffnungen umfasst, wobei die Projektion auf eine Ebene senkrecht zum Produktstrahl erfolgt. Beispielsweise kann es sich bei der kleinsten konvexen geometrischen Figur um den kleinsten Kreis oder das kleinste konvexe Polygon handeln, der/das alle Öffnungen umfasst, wenn die einen oder mehreren Öffnungen kreisförmig angeordnet sind. Diese kleinste konvexe geometrische Figur begrenzt den Produktstrahl. Der Bereich innerhalb dieser kleinsten konvexen geometrischen Figur wird insbesondere als innerhalb (im Inneren) des Produktstrahls betrachtet. Der Bereich außerhalb dieser kleinsten konvexen geometrischen Figur wird insbesondere als außerhalb des Produktstrahls betrachtet.

Der mindestens eine öffnungsfreie Bereich erlaubt nun einen Dampfeintritt in das Innere des Produktstrahls, wobei der Dampf senkrecht zur Bewegungsrichtung des Produktstrahls eintreten kann, also von außerhalb des Produktstrahls in das Innere des Produktstrahls. Hierbei kann sich insbesondere Dampf durch die Grenze der kleinsten konvexen geometrischen Figur, die vorher definiert wurde, hindurch in den Produktstrahl hinein bewegen. Hierbei ist zu beachten, dass der Dampfeintritt senkrecht zur Richtung des Produktstrahls zwar möglich sein muss, der tatsächliche Dampfeintritt im Dampf-Infusionsbehälter allerdings von der Eintrittsrichtung des Dampfes abhängt, also der Dampfeintritt in den Produktstrahl alternativ oder zusätzlich auch in eine andere Richtung, z.B. schräg zum Produktstrahl oder nur mit einer geringen Winkelabweichung zur Richtung des Produktstrahls, z.B. nicht mehr als 20°, z.B. nicht mehr als 10° zum Produktstrahl, erfolgen kann. Erfindungsgemäß muss ein Dampfeintritt bis zur Mitte des Produktstrahls möglich sein. Die Mitte des Produktstrahls (Mittelpunkt des Produktstrahls) kann insbesondere der Schwerpunkt der zuvor definierten kleinsten konvexen geometrischen Figur sein (Schwerpunkt des Produktstrahls).

Der mindestens eine öffnungsfreie Bereich kann beispielsweise mindestens einen Durchmesser von 15 Millimeter, insbesondere mindestens 25 Millimeter, haben.

Zur Bestimmung des Durchmessers des öffnungsfreien Bereichs wird hierbei insbesondere eine Projektion des Bereichs mit den Öffnungen senkrecht zur Bewegungsrichtung des Produktstrahls in eine Ebene senkrecht zur Richtung des Produktstrahls betrachtet. Der Mindest-Durchmesser von 15 Millimeter, insbesondere mindestens 25 Millimeter kann insbesondere bedeuten, dass ein Kreis mit diesem Durchmesser sich im gesamten öffnungsfreien Bereich bewegen lässt, und sich insbesondere von außen (insbesondere außerhalb des Produktstrahls) in das Innere des Produktstrahls bewegen lässt.

Der mindestens eine öffnungsfreie Bereich des Verteilerkopfs kann (projiziert in Richtung des Produktstrahls in eine Ebene senkrecht zur Richtung des Produktstrahls) mindestens einen Durchmesser des 2-fachen, insbesondere mindestens des 3-fachen, beispielsweise mindestens des 4- fachen Durchmessers des größten Kreises haben, der in alle Öffnungen zum Einbringen des Produktes einbeschrieben werden kann.

"In eine Öffnung zum Einbringen des Produktes einbeschrieben" kann insbesondere bedeuten, dass dieser Kreis in einer Projektion der Öffnungen in Richtung des Produktstrahls auf eine Ebene senkrecht zur Richtung des Produktstrahls einbeschrieben werden kann. Ein Kreis, der in alle Öffnungen zum Einbringen des Produktes einbeschrieben werden kann, ist ein Kreis, der in jede Öffnung zum Einbringen des Produktes einbeschrieben werden kann. Dieser Kreis kann somit insbesondere den kleinsten Durchmesser eines (Teil-)Strahls des Produktstrahls, z.B. die kleinste Dicke eines (Teil-)Strahls des Produktstrahls, beschreiben. Der Durchmesser des Kreises kann somit insbesondere die mögliche Dicke eines Produktstrahls in Verhältnis mit dem Durchmesser des mindestens einen öffnungfreien Bereichs setzen. Der mindestens eine öffnungsfreie Bereich kann insbesondere mindestens dem 2-fachen, insbesondere mindestens den 3-fachen, beispielsweise mindestens den 4-fachen Durchmesser des Durchmessers der kleinsten oder jeder, insbesondere kreisförmigen, Öffnung zum Einbringen eines Produktes aufweisen.

Alternativ oder zusätzlich kann der mindestens eine öffnungsfreie Bereich mindestens einen Durchmesser des 2-fachen, insbesondere mindestens des 3-fachen, beispielsweise mindestens des 4-fachen Durchmessers des größten Kreises haben, der in die Öffnung einbeschrieben werden kann, die diesem Bereich des öffnungsfreien Bereichs am nächsten liegt. Somit kann, beispielsweise wenn sich die Öffnungen in das Innere des Produktstrahls hinein verjüngen, sich auch der oder die öffnungsfreien Bereiche entsprechend verjüngen, da für Produktstrahlbereiche mit geringerem Durchmesser der Teilstrahlen weniger Dampf zum Erhitzen auf vergleichbare Temperaturen benötigt werden kann.

Alternativ oder zusätzlich kann der mindestens eine öffnungsfreie Bereich des Verteilerkopfs (projiziert in Richtung des Produktstrahls in eine Ebene senkrecht zur Richtung des Produktstrahls) mindestens einen Durchmesser des 2-fachen, insbesondere mindestens des 3-fachen, beispielsweise mindestens des 4-fachen mittleren Durchmessers der Öffnungen zum Einbringen des Produkts haben, oder mindestens einen Durchmesser des 2-fachen, insbesondere mindestens des 3-fachen, beispielsweise mindestens des 4fachen der kleinsten Ausdehnung aller Öffnungen zum Einbringen des Produkts oder des Mittelwertes der kleinsten Ausdehnung jeder Öffnung zum Einbringen des Produkts.

Die Erfindung umfasst des Weiteren einen Verteilerkopf, wobei die Öffnungen des Verteilerkopfs in Segmenten angeordnet sind, die durch ein oder mehrere öffnungsfreie Bereiche voneinander getrennt sind. Eine solche Segmentierung der Öffnungen des Verteilerkopfes (bzw. die daraus resultierende Segmentierung des Produktstrahls) kann erlauben, die durch die einzelnen Segmente erzeugten Teil-Produktstrahlen besser zu heizen, als wenn ein zusammenhängender Strahl vorhanden wäre. Insbesondere kann somit jedes Segment vollständig von allen Seiten mit Dampf in Kontakt kommen.

Die Öffnungen in einem Segment können verschiedene Formen, beispielsweise rund, strahlförmige, spaltförmige, x-förmige, oder ähnliche Formen aufweisen.

Ein Segment, insbesondere jedes Segment, kann dabei eine oder mindestens zwei Öffnungen umfassen, insbesondere beispielsweise mindestens vier oder mindestens zehn Öffnungen, beispielsweise mehr als 20 Öffnungen umfassen. Hierbei kann insbesondere die Anzahl der Öffnungen je Segment gleich oder verschieden sein. Beispielsweise kann ein Verteilerkopf ein oder mehrere erste Segmente mit jeweils mit einer ersten Anzahl von Öffnungen und ein oder mehr zweite Segmente mit jeweils einer zweiten Anzahl von Öffnungen umfassen. Die zweite Anzahl von Öffnungen kann größer sein als die erste Anzahl von Öffnungen, beispielsweise um einen Faktor zwischen 1,2 und 3 größer, beispielsweise einen Faktor 1,5.

Ein Segment kann mindestens zwei Öffnungen umfassen, welche in Umfangsrichtung zueinander beabstandet sind. Es können auch drei Öffnungen in mindestens einem Segment angeordnet sein, welche jeweils zueinander einen derartigen Abstand aufweisen.

Allgemeiner gesagt können zwei Öffnungen desselben Segments auf einer Geraden angeordnet sein, welche am Zentrum des Verteilerkopfes vorbeigeht, bzw. das Zentrum nicht schneidet. Die Gerade ist dabei in eine Ebene projiziert, welche senkrecht zum Produktstrahl angeordnet ist. Das Zentrum des Verteilerkopfes kann hierbei insbesondere der Schwerpunkt oder die Mitte des Verteilerkopfes (insbesondere bei Projektion in eine Ebene senkrecht zum Produktstrahl) sein. Insbesondere können alle Segmente mindestens zwei derartige Öffnungen umfassen.

Die Abstände, insbesondere der Mittelpunkte, zweier, insbesondere aller, Öffnungen desselben Segments können kleiner sein als die Abstände, insbesondere der Mittelpunkte, zweier, insbesondere aller, Öffnungen von zwei benachbarten Segmenten.

Die Abstände von mindestens zwei, insbesondere mindestens drei, insbesondere zueinander benachbarten, Öffnungen in mindestens einem Segment, insbesondere der Mehrheit der Segmente, beispielsweise aller Segmente können in zwei senkrecht zueinanderstehenden Richtungen voneinander unterschiedlich sein. Die Abstände können sich um den Faktor 1,1 oder mehr unterscheiden.

Eine Öffnungendichte in Öffnungen pro Quadratzentimeter innerhalb eines Segmentes kann größer sein als außerhalb eines Segmentes.

Ein Segment kann mindestens zwei Öffnungen umfassen. Die von einem Segment umfassten Öffnungen können jeweils voneinander durch Bereiche ohne Öffnung getrennt sein. Der Abstand von einer Öffnung zur nächsten Öffnung in einem Segment kann kleiner sein als der Abstand von zwei durch einen öffnungsfreien Bereich getrennten Öffnungen, insbesondere der Abstand von zwei Öffnungen aus zwei verschiedenen Segmenten, insbesondere beispielsweise um einen Faktor 2 oder mehr kleiner, beispielsweise um einen Faktor 5 oder mehr. Insbesondere kann diese Bedingung für jede zwei Öffnungen eines Segments und jede zwei Öffnungen, die durch einen öffnungsfreien Bereich getrennt werden, also insbesondere in zwei verschiedenen Segmenten liegen, erfüllt sein. Der Abstand von einer Öffnung zur nächsten Öffnung kann insbesondere der Abstand der Mittelpunkte der beiden Öffnungen oder der minimale Abstand zwischen zwei Randpunkten der Öffnungen sein.

Mindestens ein Segment kann genau aus einer Öffnung, beispielsweise einem langen Spalt, bestehen.

Öffnungen in einem Segment können flächig angeordnet sein, insbesondere können Öffnungen in ihrer Projektion in Richtung des Produktstrahls auf eine Ebene senkrecht zum Produktstrahl in zwei senkrecht zueinander angeordneten Richtungen angeordnet sein.

Zwei Segmente eines Verteilerkopfes können voneinander getrennte Produktzuführungen umfassen, so dass sie voneinander unabhängig mit Produkt versorgt werden können. Insbesondere kann ein Zu- und Abschalten der Produktzuführung zu einzelnen Segmenten, insbesondere von Segmenten mit getrennter Produktzuführung, (auch bezeichnet als Zu- und Abschalten der einzelnen Segmente) beim Erzeugen des Produktstrahls möglich sein. Beispielsweise kann der Verteilerkopf somit als mehrstufiger Verteilerkopf ausgebildet sein, wo je nach gewünschter Produktmenge für den Produktstrahl einzelne Segmente zu- und/oder abgeschaltet werden können. Insbesondere können beispielsweise 2, 3 oder mehr Segmente voneinander getrennte Produktzuführungen umfassen, beispielsweise können alle Segmente voneinander getrennte Produktzuführungen umfassen.

Alternativ oder zusätzlich können zwei (oder mehr) Segmente eine gemeinsame Produktzuführung umfassen. Solche zwei (oder mehr) Segmente können insbesondere optional diametral zueinander angeordnet sein. Dies kann den Vorteil haben, dass dadurch die Symmetrie des Produktstrahls gewahrt werden kann. Dies kann insbesondere eine gleichmäßige und/oder gleichartige Erhitzung der jeweiligen Segmente ermöglichen.

Verschiedene Segmente eines Verteilerkopfes können symmetrisch zueinander angeordnet sein, insbesondere punktsymmetrisch und/oder achsensymmetrisch zueinander. Eine solche symmetrische Anordnung kann vorteilhaft sein, da damit eine gleichmäßige Erhitzung der jeweiligen Segmente des Produktstrahls ermöglicht werden kann.

Ein Verteilerkopf kann eine gerade oder eine ungerade Anzahl an Segmenten umfassen. Die Segmente können beispielsweise die Form eines Kreissektors, eines Kreisbogens (beides ausgehend vom Mittelpunkt des Produktstrahls), einer abgerundeten X-Form, eine Schmetterlingsform, eine Hantel-Form, oder andere Formen aufweisen. Insbesondere können die Segmente als Kreisbögen in einem festen Abstand von dem Mittelpunkt des Produktstrahls und/oder als Kreisbögen mit verschiedenen Abständen vom Mittelpunkt des Produktstrahls angeordnet sein. Mehrere Segmente in einem festen Abstand vom Mittelpunkt des Produktstrahls können optional untereinander in gleichem Abstand voneinander entlang des Kreisumfangs angeordnet sein.

Die Segmente des Verteilerkopfes können in einer gemeinsamen Grundplatte integriert sein.

Der Verteilerkopf, insbesondere die gemeinsame Grundplatte, kann optional in den Kopf des Dampf-Infusionsbehälters angeordnet werden. In dem Kopf des Dampf-Infusionsbehälters angeordnet kann insbesondere umfassen, dass der Verteilerkopf im Dampf-Infusionsbehälter so angeordnet wird oder anordenbar ist, dass er oberhalb und seitlich nicht von Dampf umspült wird oder umspült werden kann.

Der Verteilerkopf kann mindestens zwei verschiedene Sorten von Öffnungen aufweisen, beispielsweise Öffnungen mit verschiedenen Formen, Durchmessern, verschiedenen Größen und/oder verschiedenen Längen. Die Öffnungen können insbesondere als Aussparungen, beispielsweise in Form von einer Stanzung oder Materialaussparung, oder Bohrungen ausgebildet sein. Aussparungen und Bohrungen können als Aussparungen oder Bohrungen mit Rundungen oder Fase ausgebildet sein. Bohrungen mit Rundungen oder Fase können insbesondere einen verbesserten Produktfluss sowie eine verbesserte Strahlstabilität ermöglichen, beispielsweise, weil sie Verwirbelungen vermeiden können.

Beispielsweise können eine oder mehrere Öffnungen kreisrunde, ovale, rechteckige, stäbchenförmige, langlochförmige, schlitzförmige, gebogene oder ähnliche Querschnitte aufweisen (wobei insbesondere der Querschnitt als Projektion in Richtung des Produktstrahls in eine Ebene senkrecht zum Produktstrahl betrachtet wird). Die Öffnungen können beispielsweise als kreisförmige Bohrungen, optional mit Rundungen oder Fase, ausgebildet sein oder solche umfassen. Alternativ oder zusätzlich können die Querschnitte, beispielsweise stäbchenförmige, langlochförmige oder schlitzförmige Querschnitte, optional jeweils mit abgerundeten Ecken und/oder optional mit einer Biegung, kreisförmige Ringspaltform, kreisbogige Ringspaltformen oder andere Formen umfassen.

Ein Verteilerkopf und/oder der Produktstrahl kann verschiedene Querschnitte (projiziert entlang der Richtung des Produktstrahls auf eine Ebene senkrecht zum Produktstrahl) umfassen. Beispielsweise kann der Querschnitt des Produktstrahls und/oder des Verteilerkopfs kreisförmig, rechteckig, quadratisch, oval oder in einer anderen Form ausgebildet sein.

Die Öffnungen können geordnet angeordnet sein, z.B. nach außen laufend von der Mitte des Produktstrahls ausgehend, insbesondere in Reihen, angeordnet sein, insbesondere radial vom Schwerpunkt des Produktstrahls. Alternativ oder zusätzlich können die Öffnungen auf Kreisbögen um die Mitte des Produktstrahls angeordnet sein. Beispielsweise können Öffnungen radial von der Mitte des Produktstrahls auf Kreisbögen mit verschiedenen Abständen zur Mitte des Produktstrahls angeordnet sein und/oder in einem Abstand in gleichmäßigen Abständen zueinander. Die Öffnungen können in Projektion auf die Produktstrahlrichtung senkrecht zum Produktstrahl beispielsweise alternativ oder zusätzlich schräg zur radialen Richtung und/oder kreisbogenförmig angeordnet sein. Für nicht-kreisförmige Begrenzungen des Produktstrahls, beispielsweise, insbesondere regelmäßige, Polygone, kann radial insbesondere eine Ausrichtung ausgehend vom Schwerpunkt des Produktstrahls nach außen bedeuten, insbesondere kann radial eine radiale Ausrichtung in dem kleinsten die Begrenzung des Produktstrahls umfassenden Kreis um den Schwerpunkt des Produktstrahls bedeuten.

Alternativ oder zusätzlich kann/können die Öffnung(en) flächig angeordnet sein, also insbesondere bei Projektionsrichtung des Produktstrahls auf eine Ebene senkrecht dazu eine Ausdehnung/Anordnung aufweisen, die sich in zwei zueinander senkrechte Richtungen erstreckt.

Der/die öffnungsfreie(n) Bereiche in einem Verteilerkopf kann/können zumindest teilweise radial ausgehend vom Mittelpunkt, insbesondere Schwerpunkt, des Produktstrahls ausgerichtet sein. Dies kann vorteilhaft sein, da eine radiale Anordnung einen Dampfeintritt in den Produktstrahl auf kürzestem Weg und somit eine erhöhte Verfügbarkeit von Dampf im Inneren des Produktstrahls ermöglichen kann. Erfindungsgemäß muss ein (oder mehrere) öffnungsfreier Bereich bis zur Mitte des Produktstrahls durchgängig sein. Somit kann auch in der Mitte des Produktstrahls eine Verfügbarkeit von Dampf gegeben, und somit eine möglichst gleichmäßige Erhitzung möglich sein. Zudem kann durch Dampf in der Mitte des Produktstrahls eine Aufweitung desselben verhindert oder verringert werden.

Die Erfindung umfasst des Weiteren ein Dampf-Infusionssystem, umfassend einen zuvor beschriebenen Dampf-Infusionsbehälter zum Erwärmen eines flüssigen Produktes, insbesondere eines flüssigen Lebensmittelproduktes, und einen zuvor beschriebenen Verteilerkopf zum Einbringen des Produktes in den Dampf-Infusionsbehälter.

Der Dampf-Infusionsbehälter kann insbesondere einen Bereich zum Zuführen des Produktes umfassen, in dem ein zuvor beschriebener Verteilerkopf angeordnet sein kann. Der Verteilerkopf kann insbesondere im Kopf des Dampf-Infusionsbehälters angeordnet sein. Der Dampf-Infusionsbehälter kann des Weiteren, insbesondere zylindrische, Wände umfassen, und eine, insbesondere seitlich angeordnete, Zuleitung für Dampf. Der Dampf-Infusionsbehälter kann zu einer Verwendung bei einem Druck von zwischen 4 und 5 bar, z.B. 4,5 Bar, ausgebildet sein. Er kann für folgende Arbeitsparameter ausgelegt sein: Das Produkt kann bei seiner Zuführung eine Temperatur von zwischen 75 und 85 °C, z.B. ca. 80°C aufweisen, und der Dampf kann mit einer Temperatur zwischen 120° und 160°, z.B. zwischen 130° und 150° C zugeführt werden. Der Dampf-Infusionsbehälter kann einen, insbesondere konisch ausgebildeten, Auffangbereich am unteren Ende des Infusionsbehälters umfassen, der optional gekühlt werden kann, z.B. auf eine Temperatur zwischen 100 °C und 140°C, z.B. zwischen 110°C und 130°C. Hierfür kann insbesondere eine Zuführung und eine Abführung von Kühlmittel, insbesondere temperiertem Wasser, am Dampf-Infusionsbehälter umfasst sein. Der optionale konisch ausgebildete Auffangbereich kann eine Abflussmöglichkeit, z.B. eine Öffnung oder ein Ventil umfassen, um das Produkt abzuleiten oder abzupumpen.

Die Erfindung umfasst des Weiteren ein System zur Ultrahocherhitzung eines flüssigen Produktes insbesondere eines flüssigen Lebensmittelproduktes, umfassend ein zuvor beschriebenes Dampf-Infusionssystem zur Ultrahocherhitzung des Produktes, und eine hinter dem Dampf-Infusionssystem angeordnete Abfüllanlage für das Produkt. Das System zur Ultrahocherhitzung eines solchen flüssigen Produktes kann des Weiteren optional eine Heißhaltestrecke umfassen, an der das Produkt auf einer bestimmten Temperatur, beispielsweise zwischen 120°C und 160°C, gehalten wird. Beispielsweise kann das System zur Ultrahocherhitzung eines flüssigen Produktes am Auffangbereich einen Auslass für das Produkt umfassen, von dem mit einer Pumpe das flüssige Produkt aus dem Auffangbereich zu einer vom System zur Ultrahocherhitzung umfassten Heißhaltestrecke und dann in einen Unterdruckbereich geleitet werden kann, wo das Produkt abgekühlt werden kann und optional das durch den Dampf hinzugefügte Wasser entzogen werden kann. Anschließend kann das Produkt in die Abfüllanlage geführt und dort abgefüllt werden.

Die Erfindung umfasst des Weiteren ein Verfahren zum Erhitzen eines flüssigen Produktes, insbesondere eines flüssigen Lebensmittelproduktes, gekennzeichnet dadurch, dass ein Verteilerkopf wie zuvor beschrieben verwendet wird, um das Produkt in einen Dampf-Infusionsbehälter einzubringen. Das Verfahren kann des Weiteren einen, zwei oder alle der folgenden Schritte umfassen: ein Zuführen von Dampf, ein Kühlen des Auffangbereichs, um ein Anbacken des Produktes zu verhindern, ein Aufbewahren des Produktes in einer Heißhaltestrecke und/oder ein Abfüllen des Produktes. Das Verfahren kann in einem Dampf-Infusionssystem wie zuvor beschrieben und/oder in einem zuvor beschriebenen System zu Ultrahocherhitzung eines flüssigen Produktes vorgenommen werden, und insbesondere dabei auf die im Zusammenhang mit diesem Dampf-Infusionssystem und System zur Ultrachocherhitzung beschriebenen Temperaturen erhitzt gekühlt werden.

### Weiterer Erfindungsaspekt

Ebenfalls offenbart, aber nicht Teil der Erfindung gemäß der Ansprüchen, sind ein System und ein Verfahren zur Erzeugung von gezielten Pulsationen im Produktzulauf eines Verteilerkopfes zum Einbringen eines flüssigen Produktes, insbesondere eines flüssigen Lebensmittelproduktes, in einem Dampf-Infusionsbehälter.

Problematisch beim Zuführen eines Produktes durch einen Verteilerkopf in einen Dampf-Infusionsbehälter kann es sein, dass die zuführenden Geräte und Vorrichtungen, insbesondere beispielsweise die Pumpe und/oder Ventile und Regelventile, häufig schalten. Somit entstehen Pulsationen, und durch diese kann es zu einer Beeinflussung des frei fallenden Flüssigkeitsstrahls kommen. Dadurch kann es zu Fluktuationen im Produktstrom kommen, die die Strahlstabilität beeinflussen können (eine solche Beeinflussung der Strahlstabilität ist beispielsweise in der Encyclopaedia cinematographica, Film E3175, Gerd. E. A. Meier und Georg Grabitz, 1995, Institut des Wissenschaftlichen Films in einem ganz anderen Kontext beschrieben). Fluktuationen in einem Strahl erhöhen jedoch die Gefahr, dass der Strahl an die Behälterwand abgelenkt wird und an die heiße Wand gelangt, was zu Geschmacksbeeinflussungen, Fouling und der Notwendigkeit von häufigerer Reinigung des Dampf-Infusionsbehälters führen kann. Die Pulsationen haben aufgrund der durch sie ausgelösten Fluktuationen im Produktstrahl somit einen Einfluss auf die Betriebszeit des Dampf-Infusionsbehälters und können insbesondere die Betriebszeit verringern.

Der Offenbarung liegt nun die Aufgabe zugrunde, dieses Problem zu beheben oder zumindest zu verringern. Das System und das Verfahren zum Erzeugen von gezielten Pulsationen im Produktzulauf eines Verteilerkopfes zum Einbringen eines flüssigen Produktes, insbesondere eines flüssigen Lebensmittelproduktes, in einen Dampf-Infusionsbehälter soll durch Erzeugung von gezielten Pulsationen im Produktzulauf die Strahlstabilität erhöhen. Solche gezielten Pulsationen im Produktzulauf können beispielsweise bei einem Dampf-Infusionssystem oder einem System zur Ultrahocherhitzung eines flüssigen Produktes, insbesondere in einem Dampf-Infusionssystem oder System zur Ultrahocherhitzung eines flüssigen Produktes wie zuvor beschrieben, verwendet werden. Das System und das Verfahren zum Erzeugen von gezielten Pulsationen können Anwendung finden im Produktzulauf zu einem zuvor beschriebenen Verteilerkopf, aber auch bei einem Verteilerkopf, der keine öffnungsfreien Bereiche im Bereich der Öffnungen wie oben beschrieben aufweist, sondern nur ein oder mehrere Öffnungen zum Zuführen eines flüssigen Produktes in einen Dampf-Infusionsbehälter und entsprechenden, einen solchen Verteilerkopf umfassenden Dampf-Infusionssystem und/oder System zur Ultrahocherhitzung eines flüssigen Produktes.

Ein System zum Erzeugen von gezielten Pulsationen im Produktzulauf umfasst eine Messvorrichtung zum Erfassen von prozessbedingten Schwankungen und/oder Pulsationen, eine Vorrichtung zum Erzeugen von gezielten Pulsationen und eine Steuerungsvorrichtung zum Steuern der Vorrichtung zum Erzeugen von gezielten Pulsationen aufgrund der erfassten Ergebnisse der Messvorrichtung zum Erfassen von prozessbedingten Schwankungen und/oder Pulsationen.

Insbesondere kann die Steuerungsvorrichtung dazu ausgebildet sein, aufgrund der erfassten prozessbedingten Schwankungen und/oder Pulsationen die Vorrichtung zum Erzeugen von gezielten Pulsationen so anzusteuern, dass durch die gezielten Pulsationen die prozessbedingten Schwankungen und/oder Pulsationen reduziert oder verhindert werden. Insbesondere können die durch die Steuerung der Vorrichtung zum Erzeugen von gezielten Pulsationen erzeugten Pulsationen destruktiv mit den gemessenen (im System ohnehin vorhandenen) Pulsationen interferieren, so dass auf den Produktstrahl weniger oder keine Pulsationen wirken. Somit kann der Strahlzerfall so verzögert werden, dass die Wahrscheinlichkeit, dass das Produkt an die Behälterwand gerät, verringert wird.

Beispielsweise kann die Vorrichtung zum Erzeugen von gezielten Pulsationen ein beweglicher Kolben sein oder einen solchen umfassen, bei dem Kolbenhub und Drehzahl einstellbar sind, insbesondere kann durch den Kolbenhub die Amplitude und durch die Drehzahl die Frequenz der erzeugten Pulsation bestimmbar sein.

Alternativ oder zusätzlich kann die Vorrichtung zum Erzeugen von gezielten Pulsationen einen Pulsator nach dem Prinzip einer Membranpumpe sein oder umfassen, wobei dieser insbesondere hygienegerecht (d.h. u.a. insbesondere sterilisierbar, reinigbar, lebensmittelecht, korrosionsbeständig, glatte Oberflächen umfassend, an denen sich keine Verschmutzungen dauerhaft festsetzen können und/oder keine bzw. wenig Toträume umfassend) ausgebildet sein kann. Derartige Pumpen werden bereits erfolgreich CIP-Anlagen ("Cleaning-in-Place", Reinigung vor Ort-Anlagen) eingesetzt. Die Membranpumpe kann beispielsweise in einem Bypass zur Hauptströmung angeschlossen werden. Optional kann dabei eine Rückschlagklappe vorhanden sein und verwendet werden. Die Membranpumpe kann beispielsweise stromaufwärts der optionalen Rückschlagklappe im Bypass angeordnet sein

Alternativ oder zusätzlich kann die Vorrichtung zum Erzeugen von gezielten Pulsationen eine Membran umfassen, die die gezielten Pulsationen überträgt. Die Vorrichtung zum Erzeugen von gezielten Pulsationen kann alternativ oder zusätzlich ein flexibles Rohr oder Ähnliches umfassen, um die gezielten Pulsationen zu erzeugen.

Die Vorrichtung zum Erzeugen von gezielten Pulsationen kann insbesondere zum Erzeugen einer pulsierenden Strömung ausgebildet sein, bei der Frequenz und Amplitude geregelt werden können.

Die Messvorrichtung zum Erfassen von prozessbedingten Schwankungen und/oder Pulsationen kann dazu ausgebildet sein, vor dem Produktanlauf gemessene Pulsationen (z.B. mittels hochauflösender Massendurchflussmesser) und/oder einen gemessenen Strahlzerfall zu erfassen. Beispielsweise kann sie eine, zwei oder mehr Kameras umfassen, die im Dampf-Infusionsbehälter angeordnet ist oder Aufnahmen im Dampf-Infusionsbehälter machen kann, z.B. von außen.

Ein Beispiel für eine mögliche Kameraausrichtung ist in EP 3 171 701 B1, insbesondere Figur 2 davon, gezeigt, wo insbesondere zwei Kameras am auf den Produktstrahl ausgerichtet sind. Beispielsweise kann insbesondere eine erste Kamera, beispielsweise vom Kopf des Dampf-Infusionsbehälters, auf den Produktstrahl, insbesondere dessen unteren Bereich, optional einschließlich eines Teiles des Auffangbereichs ausgerichtet sein. Eine zweite Kamera kann im Bereich des, insbesondere zylindrischen, Körpers des Dampf-Infusionsbehälters angeordnet sein und auf den Produktstrahl, insbesondere dessen oberen Bereich, optional einschließlich eines Teil des Verteilerkopfs, ausgerichtet sein. In anderen Ausführungsformen kann nur eine Kamera umfasst sein, die beispielsweise wie die erste oder die zweite Kamera oder anders ausgerichtet sein kann. Alternative können zwei oder mehr Kameras umfasst sein, von denen eine oder mehrere auch anders ausgerichtet sein können.

Somit können prozessbedingte Schwankungen im Produktstrahl erkennbar sein. Alternativ oder zusätzlich können Pulsationen im Zulauf gemessen werden.

Somit kann das System zum Erzeugen von bestimmten Pulsationen dann mit der Steuerung so gesteuert werden, dass ein gewünschter Strömungsverlauf des Produktstrahls eingestellt wird.

Das System zum Erzeugen von bestimmten Pulsationen kann insbesondere auch einen Verteilerkopf umfassen, wobei der Verteilerkopf ausgebildet ist zum Einbringen eines flüssigen Produktes, insbesondere eines flüssigen Lebensmittelproduktes, in einen Dampf-Infusionsbehälter, und eine oder mehrere Öffnungen zum Einbringen des Produktes in einen Dampf-Infusionsbehälter in Form eines, insbesondere aus Teilstrahlen zusammengesetzten, Produktstrahls umfasst. Optional kann der Verteilerkopf im Bereich der einen oder mehreren Öffnungen mindestens einen öffnungsfreien Bereich umfassen, beispielsweise wie oben beschrieben, oder keinen solchen öffnungsfreien Bereich umfassen.

Das System zum Erzeugen von bestimmten Pulsationen kann in einem einen solchen Verteilerkopf (mit oder ohne öffnungsfreie Bereiche) umfassenden Dampf-Infusionssystem und/oder System zur Ultrahocherhitzung eines flüssigen Produktes umfasst sein.

Die Erfindung umfasst des Weiteren ein Verfahren zur Erzeugung von gezielten Pulsationen im Produktzulauf eines Verteilerkopfes zum Einbringen eines flüssigen Produktes, insbesondere eines flüssigen Lebensmittelproduktes, in einem Dampf-Infusionsbehälter. Dieses Verfahren kann insbesondere in einem System zum Erzeugen von gezielten Pulsationen im Produktzulauf eines Verteilerkopfes wie oben beschrieben durchgeführt werden.

Das Verfahren umfasst die Schritte: Erfassen von prozessbedingten Schwankungen und/oder Pulsationen; Ansteuern der Vorrichtung zum Erzeugen von gezielten Pulsationen aufgrund der erfassten prozessbedingten Schwankungen und/oder Pulsationen, so dass durch die Vorrichtung zum Erzeugen von gezielten Pulsationen gezielte Pulsationen erzeugt werden, die die prozessbedingten Schwankungen und/oder Pulsationen reduzieren oder verhindern. Insbesondere können die durch die Steuerung der Vorrichtung zum Erzeugen von gezielten Pulsationen erzeugte Pulsationen destruktiv mit den vorhandenen Positionen interferieren, so dass auf den Produktstrahl geringere oder keine Pulsationen wirken.

Das Verfahren kann des Weiteren alle Verfahrensschritte umfassen, die zuvor im Zusammenhang mit dem Verteilerkopf beschrieben wurden.

Weitere Aspekte und Details der Erfindung sind in den beiliegenden Figuren (nicht notwendigerweise maßstabsgetreu) gezeigt. Hierbei zeigt:
- Figur 1: schematisch einen Dampf-Infusionsbehälter
- Figur 2: schematisch einen Verteilerkopf mit kreisbogenförmigen Segmenten
- Figuren 3a - 3c: schematisch mögliche Formen von öffnungsfreien Bereichen in Verteilerköpfen
- Figur 4: schematisch einen Verteilerkopf mit einem Segment
- Figur 5: schematisch einen mehrstufigen Verteilerkopf
- Figur 6: schematisch einen segmentierten Verteilerkopf
- Figur 7: schematisch ein System zur Ultrahocherhitzung eines flüssigen Produktes
- Figur 8: schematisch ein System zur Erzeugung von bestimmten Pulsationen.

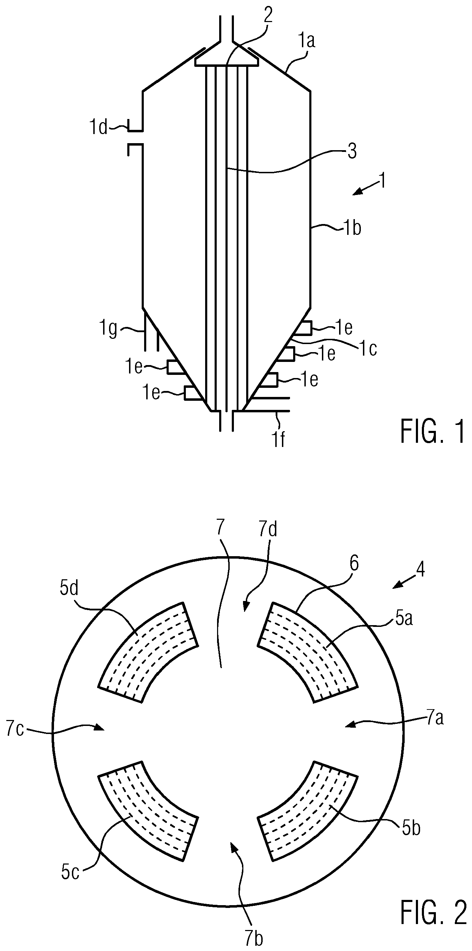

Figur 1 zeigt schematisch einen Dampf-Infusionsbehälter 1. Der Dampf-Infusionsbehälter 1 umfasst einen Kopf 1a, der wie in diesem Beispiel etwa konisch ausgebildet sein kann. Er umfasst des Weiteren einen, insbesondere zylindrischen, Körper 1b und einen Auffangbereich 1c für das Produkt, der ebenfalls beispielsweise konisch ausgebildet sein kann. Der Dampf-Infusionsbehälter umfasst des Weiteren eine Zuführung 1d für Dampf. Er kann optional des Weiteren eine Kühlmöglichkeit für den Auffangbereich umfassen, die beispielsweise ein spiralförmig den Auffangbereich umgebendes Rohr 1e oder alternativ einen Doppelmantel (hier nicht gezeigt) umfassen kann. Die Kühlmöglichkeit kann insbesondere eine Zuführung 1f und Ableitung 1g für temperiertes Wasser umfassen.

In dem Kopf 1a ist ein Verteilerkopf 2 zum Einbringen eines flüssigen Produktes in den Dampf-Infusionsbehälter umfasst. Der Verteilerkopf 2 ist so ausgebildet und angeordnet, dass er einen Produktstrahl 3 erzeugen kann, der von oben nach unten in etwa parallel zu dem, insbesondere zylindrischen, Körper 1b verläuft, insbesondere, ohne die Wände des Körpers zu berühren. Dieser Produktstrahl 3 kann durch im Dampf-Infusionsbehälter 1 durch die Zuführung 1d von zugeführtem Dampf für den Zeitraum seines Falls erwärmt und im Auffangbereich 1c aufgefangen. Der Auffangbereich 1c kann optional gekühlt werden. Am Dampf-Infusionsbehälter 1 kann am Auffangbereich ein Ventil, eine Pumpe zum Abpumpen des flüssigen Produktes, und weitere Bauteile, z.B. eine Heißhaltestrecke, anschließbar oder angeschlossen sein.

Figur 2 zeigt schematisch einen erfindungsgemäßen Verteilerkopf 4 mit kreisbogenförmig angeordneten Segmenten 5a, 5b, 5c, 5d. Die Grenze des Produktstrahls kann in etwa durch den schematisch eingezeichneten Ring 6 gegeben sein; bei feinerer Darstellung könnte die Grenze des Produktstrahls ein Vieleck innerhalb des Rings 6 umfassen. Die Segmente des Produktstrahls werden durch den öffnungsfreien Bereich 7 voneinander getrennt, wobei durch die Bereiche 7a, 7b, 7c und 7d des öffnungsfreien Bereichs 7 ein Dampfeintritt in das Innere des Produktstrahls senkrecht zur Richtung des Produktstrahls ermöglicht wird.

Jedes der kreisbogenförmig angeordneten Segmente 5a, 5b, 5c, 5d umfasst mehrere Öffnungen zum Einbringen des Produktes in einen Dampf-Infusionsbehälter. Der Produktstrahl ist zusammengesetzt durch die durch die jeweiligen Öffnungen zugeführten Teilstrahlen, die insbesondere stäbchenförmig ausgebildet sein können. In anderen Ausführungsformen (hier nicht gezeigt), können andere Öffnungsformen umfasst sein, z.B. kreisrunde oder ovale Öffnungen oder stäbchenförmige Öffnungen, die radial und/oder schräg (ca. 45 °, z.B. zwischen 15 und 75° zur radialen Richtung) in den Segmenten angeordnet sind; in weiteren Ausführungsformen (hier nicht gezeigt) kann ein oder jedes Segment kann genau eine Öffnung, z.B. eine spaltförmige, kreisbogenförmige Öffnung umfassen.

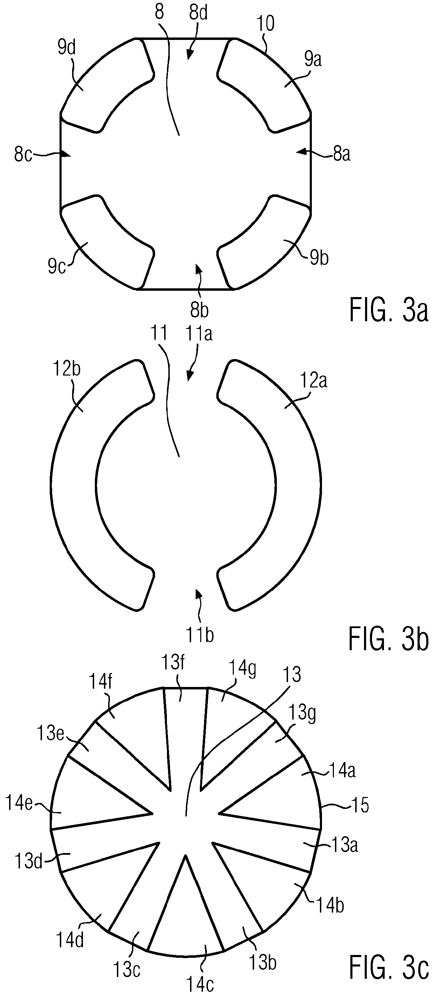

Figur 3a zeigt beispielhaft eine mögliche Anordnung von einem öffnungsfreien Bereich an einen Verteilerkopf, in dem der öffnungsfreie Bereich 8 eine ähnliche Form hat wie in Figur 2. Der Produktstrahl 9 hat kreisbogenförmige Segmenten 9a, 9b, 9c und 9d wird durch die schematisch eingezeichnete Figur 10 begrenzt. Die Bereiche 8a, 8b, 8c und 8d des öffnungsfreien Bereichs 8 erlauben einen Dampfeintritt in das Innere des Produktstrahls. Die Segmente 9a - 9d können eine oder mehrere Öffnungen umfassen.

Figur 3b zeigt schematisch eine alternative Anordnung von öffnungsfreien Bereichen an einem Verteilerkopf. Der dort gezeigte öffnungsfreie Bereich 11 trennt den Produktstrahl in zwei Segmente 12a, 12b, die kreisbogenförmig angeordnet sind. Die öffnungsfreien Bereiche 11a, 11b des öffnungsfreien Bereichs 11 erlauben einen Eintritt von Dampf in das Innere des Produktstrahls senkrecht zur Richtung des Produktstrahls.

Figur 3c zeigt schematisch eine weitere Anordnung von öffnungsfreien Bereichen an einem Verteilerkopf. Der dort gezeigte öffnungsfreie Bereich 13 zerlegt den Produktstrahl, der von einer schematisch eingezeichneten Figur 15 begrenzt wird, in Segmente 14a - 14g, die insbesondere die Form eines Kreissegments (Kuchenstücks) aufweisen können. Die Teilbereiche 13a - 13g ermöglichen einen Eintritt von Dampf in das Innere des Produktstrahls senkrecht zur Richtung des Produktstrahls.

In Figuren 3a, 3b und 3c sind beispielhaft die öffnungsfreien Bereiche mindesten in den Teilbereichen 8a - 8d, 11a, 11b und 13a - g radial ausgehend vom Mittelpunkt des Produktstrahls ausgerichtet und sind bis zur Mitte des Produktstrahls durchgängig, so dass ein Dampfeintritt zur Mitte des Produktstrahls auf dem kürzesten Weg möglich ist. In anderen Ausführungsformen (nicht gezeigt) können der oder die öffnungfreien Bereiche mindestens in Teilbereichen radial ausgehend vom Mittelpunkt des Produktstrahls ausgerichtet sein und nicht bis zur Mitte des Produktstrahls durchgängig sein oder nicht radial ausgerichtet sein.

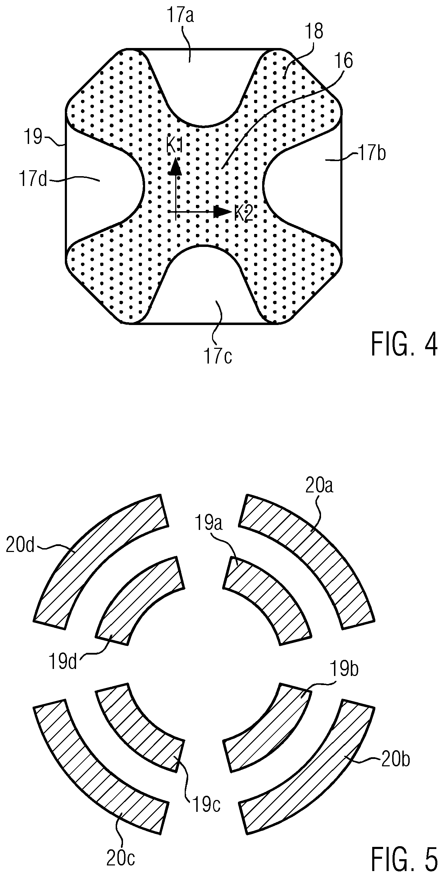

Figur 4 zeigt schematisch einen Verteilerkopf mit einem Segment 16 und vier öffnungsfreien Bereichen 17a - 17d. Die öffnungsfreien Bereiche 17a - 17d im Bereich der Öffnungen 18 erlauben einen Eintritt von Dampf in das Innere des von der schematisch eingezeichneten Figur 19 begrenzten Produktstrahls. Sie erstrecken sich in einigen Teilbereichen radial ausgehend vom Mittelpunkt des Produktstrahls, sind aber nicht bis zur Mitte des Produktstrahls durchgängig. Die Öffnungen 18 sind in diesem Beispiel im Segment flächig angeordnet. Ihre Projektionen in Richtung des Produktstrahls auf eine Ebene senkrecht dazu weisen insbesondere eine Anordnung auf, die sich in zwei zueinander senkrechte Richtungen k1, k2 erstreckt. In Figur 4 haben die öffnungsfreien Bereich beispielhaft mindestens einen Durchmesser des 3-fachen Durchmessers des größten Kreises, der in alle Öffnungen 18 einbeschrieben werden kann.

Figur 5 zeigt schematisch eine beispielhafte Segmentanordnung eines Verteilerkopfes mit 8 Segmenten 19a - d und 20a - d. Die Segmente 19a - d und 20a - d sind jeweils kreisbogenförmig angeordnet und die vier Segmente 19a - d untereinander sind mit gleichen Abständen zueinander angeordnet, ebenso die vier Segmente 20a - d. Die Segmente 19a - d liegen radial innen von den Segmenten 20a - d. In dem gezeigten Beispiel können die Segmente 20a - d im äußeren Ring insbesondere eine höhere Anzahl, z.B. mindestens 1,5-fache Anzahl, insbesondere eine 1,5-fache Anzahl oder 3-fache Anzahl, von Öffnungen umfassen wie die Segmente 19a - d im inneren Ring.

In dem gezeigten Beispiel können beispielsweise die Segmente 19a - d optional eine separate Produktzuführung von Segmenten 20a - 2d aufweisen. Somit kann der Verteilerkopf mehrstufig gesteuert werden. Für die kleinste Leistungsstufe kann das Produkt nur in Segmente 19a - d zugeführt werden. Für die mittlere Leistungsstufe kann das Produkt nur in Segmente 20a - 20d zugeführt werden. Für die höchste Leistungsstufe kann das Produkt in Segmente 19a-d und Segmente 20a - 20d zugeführt werden.

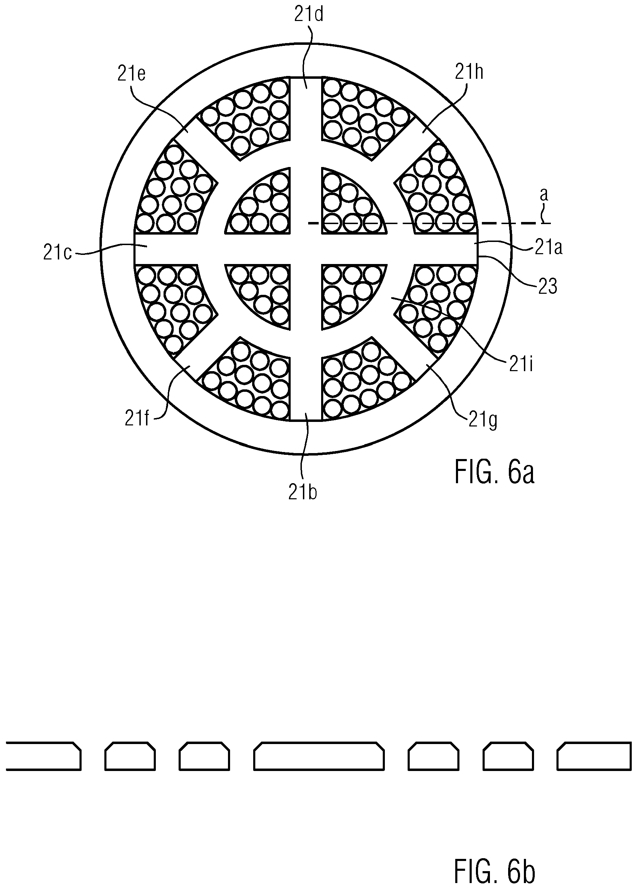

Figur 6a zeigt schematisch einen Verteilerkopf mit 12 Segmenten. Der öffnungsfreie Bereich 21 erstreckt sich in den Teilbereichen 21a - 21d radial bis zum Mittelpunkt des Produktstrahls 22, in Teilbereichen 21e - h radial zum Mittelpunkt des Produktstrahls, aber erstrecken sich nicht hin bis zum Mittelpunkt des Produktstrahls; in dem Bereich 21i verläuft der öffnungsfreie Bereich in Form eines Kreisrings. Der Produktstrahl wird von der schematisch angedeuteten konvexen Figur 23 begrenzt.

Figur 6b zeigt schematisch einen vergrößerten Querschnitt durch den Verteilerkopf der Figur 6a entlang der Linie a in einer Ebene parallel zur Richtung des Produktstrahls. Wie dort ersichtlich, umfassen die Öffnungen hier beispielhaft eine Fase zur Verbesserung des Produkteinlaufs, wobei diese Fase insbesondere in der dem Zulauf für das Produkt zugewandten Seite angeordnet sein kann.

In anderen Ausführungsformen (hier nicht gezeigt), können die Öffnungen anstatt der Fase eine Rundung zur Verbesserung des Produkteinlaufs oder keine Fase oder Rundung umfassen. Eine Fase oder Rundung zur Verbesserung des Produkteinlaufs kann auch in allen anderen Ausführungsformen, insbesondere auch den in anderen Figuren gezeigten, umfasst sein, obwohl sie dort nicht explizit gezeigt sind.

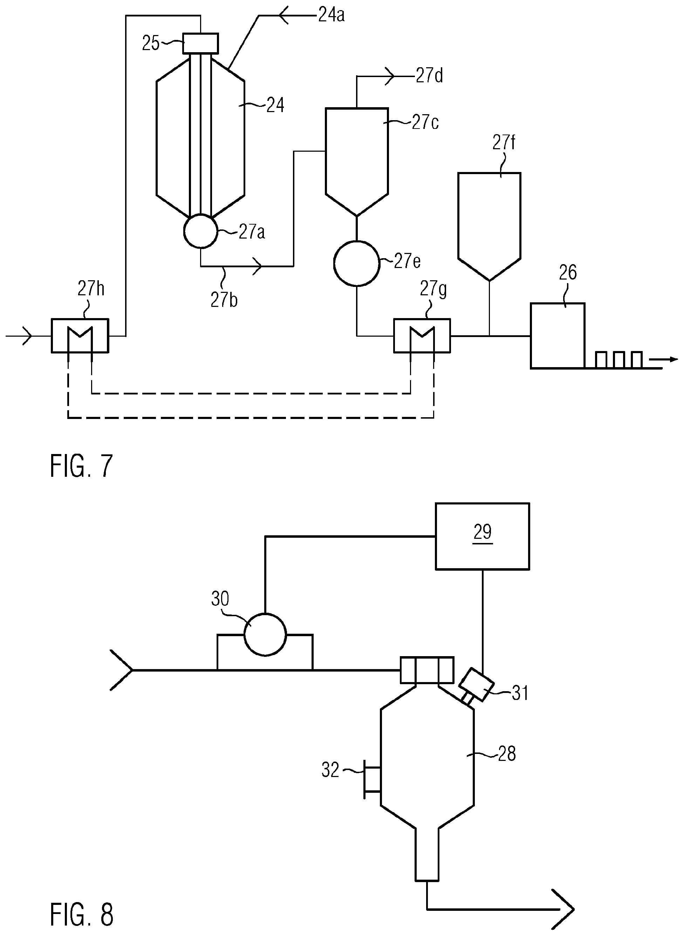

Figur 7 zeigt schematisch ein System zur Ultrahocherhitzung eines flüssigen Produktes. Das Produkt kann beispielsweise in das System durch einen (in der Figur beispielhaft links angeordneten) Eingang zugeführt werden. Das System zur Ultrahocherhitzung eines flüssigen Produktes umfasst ein Dampf-Infusionssystem mit einem Dampf-Infusionsbehälter 24 und einem Verteilerkopf 25 und einer hinter dem Dampf-Infusionssystem angeordneten Abfüllanlage 26 für das Produkt. Beispielhaft eingezeichnet ist eine Zuleitung für Dampf 24a in den Dampf-Infusionsbehälter 24. In anderen Ausführungsformen (nicht gezeigt), kann eine Zuleitung für Dampf in den Dampf-Infusionsbehälter auch an anderer Stelle des Dampf-Infusionsbehälters angeordnet sein und/oder mehrere Zuleitungen für Dampf umfasst sein. Aus der Abfüllanlage 26 können dann optional die fertig abgefüllten Produktbehälter, hier beispielhaft eingezeichnet, herausgeführt und weggeführt werden.

Eingezeichnet ist ebenfalls eine optional vorhandene Pumpe 27a, mit der Produkt aus dem Dampf-Infusionsbehälter 24 abgepumpt werden kann, eine optional vorhandene Heißhaltestrecke 27b und ein optionaler Flashkühler 27c, aus dem Dampf durch eine beispielhaft eingezeichnete optionale Ableitung 27d abgeführt werden kann. Des Weiteren kann das System zur Ultrahocherhitzung eine oder mehrere weitere Pumpen umfassen, um das Produkt zwischen den verschiedenen Behandlungsstationen weiter zu pumpen, insbesondere beispielhaft eingezeichnete Pumpe 27e, und einen optionalen Puffertank 27f, insbesondere zum Zwischenspeichern von einem pasteurisierten Produkt, stromaufwärts der Abfüllanlage 26.

Der optionale Puffertank 27f kann insbesondere stromabwärts eines optionalen Kühlers 27g und vor der Abfüllanlage 26 angeordnet sein. Der optionale Kühler kann insbesondere stromabwärts des Flashkühlers 27c angeordnet sein, wobei wie beispielhaft gezeigt zwischen Flashkühler 27c und Kühler 27g optional noch weitere Bauteile, hier insbesondere die optionale Pumpe 27e, angeordnet sein können.

Optional kann das System zur Ultrahocherhitzung eines flüssigen Produktes des Weiteren einen Vorwärmer 27h umfassen, der stromaufwärts des (vor dem) Dampf-Infusionsbehälter 24 angeordnet sein kann und das Produkt vor der Zuführung in den Dampf-Infusionsbehälter 24 vorwärmen kann. Optional können, wie hier beispielhaft durch die gestrichelte Verbindung eingezeichnet, der Vorwärmer 27h und der Kühler 27g miteinander in einem Wärmekreislauf verbunden sein oder, insbesondere über ein oder mehrere Bauteile, miteinander verbunden sein, um Wärme zurückzugewinnen. In anderen Ausführungsformen (hier nicht gezeigt), können Vorwärmer und Kühler nicht miteinander verbunden sein und/oder nur ein Vorwärmer oder ein Kühler (nicht beide) oder weder ein Vorwärmer noch ein Kühler vom System zur Ultrahocherhitzung eines flüssigen Produktes umfasst sein.

Figur 8 zeigt schematisch ein System zur Erzeugung von bestimmten Pulsationen, das hier beispielhaft an einem Dampf-Infusionsbehälter 28 angeordnet ist. Das System umfasst eine Steuerung 29, eine Messvorrichtung zum Erfassen von prozessbedingten Schwankungen und/oder Pulsationen sowie eine Vorrichtung zum Erzeugen von bestimmten Pulsationen 30. Die Vorrichtung zum Erzeugen von bestimmten Pulsationen 30 kann beispielsweise im Produktzulauf oder einem abgezweigten Teil des Produktzulaufs angeordnet sein. Typischerweise ist sie vor dem Verteilerkopf angeordnet. Die Messvorrichtung umfasst hier beispielhaft zwei Kameras 31 und 32. Durch die Steuerung 29 kann insbesondere die Vorrichtung zum Erzeugen von bestimmten Pulsationen 30 so gesteuert werden, dass sie bestimmte Pulsationen erzeugt, die destruktiv mit den vorhandenen Pulsationen interferieren. Somit kann der Produktstrahl stabilisiert werden.

Es versteht sich, dass in den zuvor beschriebenen Ausführungsbeispielen genannte Merkmale nicht auf diese speziellen Kombinationen beschränkt und auch in beliebigen anderen Kombinationen möglich sind.

## Patentansprüche

1. Verteilerkopf (2, 4) zum Einbringen eines flüssigen Produktes, insbesondere eines flüssigen Lebensmittelproduktes, in einen Dampf-Infusionsbehälter (1, 24 28), umfassend eine oder mehrere Öffnungen (18) zum Einbringen des Produktes in einen Dampf-Infusionsbehälter (1, 24, 28) in Form eines, insbesondere aus Teilstrahlen zusammengesetzten, Produktstrahls, **gekennzeichnet dadurch, dass** der Verteilerkopf (2, 4) im Bereich der einen oder mehreren Öffnungen (18) mindestens einen öffnungsfreien Bereich (7, 8, 13, 17, 21) umfasst, der so angeordnet und/oder ausgebildet ist, dass ein Produktstrahl gebildet wird, der einen Dampfeintritt in das Innere des Produktstrahls senkrecht zur Bewegungsrichtung des Produktstrahls ermöglicht und wobei ein Dampfeintritt bis zur Mitte des Produktstrahls möglich ist.

2. Verteilerkopf nach Anspruch 1, wobei der mindestens eine öffnungsfreie Bereich mindestens einen Durchmesser von 15 mm, insbesondere von mindestens 25 mm hat.

3. Verteilerkopf nach einem der vorhergehenden Ansprüche, wobei der mindestens eine öffnungsfreie Bereich mindestens einen Durchmesser der 2-fachen des Durchmessers des größten Kreises haben, der in alle Öffnungen zum Einbringen des Produktes einbeschrieben werden kann.

4. Verteilerkopf nach einem der vorhergehenden Ansprüche, wobei die Öffnungen des Verteilerkopfs in Segmenten (5a-5d, 9a-9d, 12a-12b, 14a-14g, 16, 19a-19d, 20a-20d) angeordnet sind, die durch einen oder mehrere öffnungsfreie Bereiche voneinander getrennt sind.

5. Verteilerkopf nach einem der vorhergehenden Ansprüche, wobei ein Segment (5a-5d, 9a-9d, 12a-12b, 14a-14g, 16, 19a-19d, 20a-20d) mindestens zwei Öffnungen umfasst, insbesondere mindestens vier oder mindestens zehn Öffnungen.

6. Verteilerkopf nach Anspruch 5, wobei der Abstand von einer Öffnung zur nächsten Öffnung in einem Segment (5a-5d, 9a-9d, 12a-12b, 14a-14g, 16, 19a-19d, 20a-20d) kleiner ist als der Abstand von zwei durch einen öffnungsfreien Bereich (7, 8, 13, 17, 21) getrennten Öffnungen, insbesondere um einen Faktor 2 oder mehr kleiner, beispielsweise um einen Faktor 5 oder mehr kleiner.

7. Verteilerkopf nach einem der vorhergehenden Ansprüche, wobei zwei Segmente (5a-5d, 9a-9d, 12a-12b, 14a-14g, 16, 19a-19d, 20a-20d) voneinander getrennte Produktzuführungen umfassen.

8. Verteilerkopf nach einem der vorhergehenden Ansprüche, wobei zwei Segmente (5a-5d, 9a-9d, 12a-12b, 14a-14g, 16, 19a-19d, 20a-20d) eine gemeinsame Produktzuführung umfassen, wobei die beiden Segmente (5a-5d, 9a-9d, 12a-12b, 14a-14g, 16, 19a-19d, 20a-20d) optional diametral zueinander angeordnet sind.

9. Verteilerkopf nach einem der vorhergehenden Ansprüche, wobei die Segmente (5a-5d, 9a-9d, 12a-12b, 14a-14g, 16, 19a-19d, 20a-20d) symmetrisch zueinander angeordnet sind, insbesondere punktsymmetrisch oder achsensymmetrisch, angeordnet sind.

10. Verteilerkopf nach einem der vorhergehenden Ansprüche, wobei die Segmente (5a-5d, 9a-9d, 12a-12b, 14a-14g, 16, 19a-19d, 20a-20d) in einer gemeinsamen Grundplatte integriert sind, wobei der Verteilerkopf (2, 4) oder die Grundplatte optional in dem Kopf des Infusionsbehälters angeordnet werden kann.

11. Verteilerkopf nach einem der vorhergehenden Ansprüche, wobei der Verteilerkopf (2, 4) mindestens zwei verschiedene Sorten von Öffnungen aufweist, und/oder wobei die Öffnungen als Aussparungen oder Bohrungen, insbesondere als Bohrungen mit Rundungen oder Fase, ausgebildet sind und/oder wobei die Öffnungen radial und/oder auf Kreisbögen und/oder flächig angeordnet sind.

12. Verteilerkopf nach einem der vorhergehenden Ansprüche, wobei der öffnungsfreie Bereich (7, 5, 11, 13, 17, 21) zumindest teilweise radial ausgerichtet ist und/oder wobei mindestens ein öffnungsfreier Bereich (7, 11, 13, 21) bis zur Mitte des Produktstrahls durchgängig ist.

13. Dampf-Infusionssystem umfassend einen Dampf-Infusionsbehälter (1, 24, 28) zum Erwärmen eines flüssigen Produktes, insbesondere eines flüssigen Lebensmittelproduktes, und einen Verteilerkopf (2, 4) nach einem der vorhergehenden Ansprüche zum Einbringen des Produktes in den Dampf-Infusionsbehälter (1, 24, 28).

14. System zur Ultrahocherhitzung eines flüssigen Produktes, insbesondere eines flüssigen Lebensmittelproduktes, umfassend ein Dampf-Infusionssystem nach dem vorhergehenden Anspruch zur Ultrahocherhitzung des Produktes und eine hinter dem Dampf-Infusionssystem angeordnete Abfüllanlage (26) für das Produkt.

15. Verfahren zum Erhitzen eines flüssigen Produktes, insbesondere eines flüssigen Lebensmittelproduktes, **gekennzeichnet dadurch, dass** ein Verteilerkopf nach einem der Ansprüche 1 bis 12 verwendet wird, um das Produkt in einen Dampf-Infusionsbehälter (1, 24, 28) einzubringen, wobei das Verfahren optional in einem Dampf-Infusionssystem nach Anspruch 13 und/oder einem System zur Ultrahocherhitzung eines flüssigen Produktes nach Anspruch 14 vorgenommen wird.

## Claims

1. Distribution head (2, 4) for introducing a liquid product, in particular a liquid food product, into a steam infusion container (1, 24, 28), comprising one or more openings (18) for introducing the product into a steam infusion container (1, 24, 28) in the form of a product jet, in particular composed of partial jets, **characterized in that** the distribution head (2, 4) comprises at least one aperture-free region (7, 8, 13, 17, 21) in the region of the one or more apertures (18), which is arranged and/or designed such that a product jet is formed which allows steam to enter the interior of the product jet perpendicular to the direction of movement of the product jet and wherein steam can enter up to the center of the product jet.

2. Distribution head according to claim 1, wherein the at least one aperture-free region has a diameter of at least 15 mm, in particular of at least 25 mm.

3. Distribution head according to one of the preceding claims, wherein the at least one aperture-free region has a diameter of at least 2 times the diameter of the largest circle that can be inscribed in all the apertures for introducing the product.

4. Distribution head according to one of the preceding claims, wherein the openings of the distributor head are arranged in segments (5a-5d, 9a-9d, 12a-12b, 14a-14g, 16, 19a-19d, 20a-20d) which are separated from each other by one or more opening-free regions.

5. Distribution head according to one of the preceding claims, wherein a segment (5a-5d, 9a-9d, 12a-12b, 14a-14g, 16, 19a-19d, 20a-20d) comprises at least two openings, in particular at least four or at least ten openings.

6. Distribution head according to claim 5, wherein the distance from one opening to the next opening in a segment (5a-5d, 9a-9d, 12a-12b, 14a-14g, 16, 19a-19d, 20a-20d) is smaller than the distance between two openings separated by an opening-free region (7, 8, 13, 17, 21), in particular smaller by a factor of 2 or more, for example smaller by a factor of 5 or more.

7. Distribution head according to one of the preceding claims, wherein two segments (5a-5d, 9a-9d, 12a-12b, 14a-14g, 16, 19a-19d, 20a-20d) comprise product feeds separated from each other.

8. Distribution head according to one of the preceding claims, wherein two segments (5a-5d, 9a-9d, 12a-12b, 14a-14g, 16, 19a-19d, 20a-20d) comprise a common product feed, wherein the two segments (5a-5d, 9a-9d, 12a-12b, 14a-14g, 16, 19a-19d, 20a-20d) are optionally arranged diametrically to each other.

9. Distribution head according to one of the preceding claims, wherein the segments (5a-5d, 9a-9d, 12a-12b, 14a-14g, 16, 19a-19d, 20a-20d) are arranged symmetrically to one another, in particular point-symmetrically or axially symmetrically.

10. Distribution head according to one of the preceding claims, wherein the segments (5a-5d, 9a-9d, 12a-12b, 14a-14g, 16, 19a-19d, 20a-20d) are integrated in a common base plate, wherein the distributor head (2, 4) or the base plate can optionally be arranged in the head of the infusion container.

11. Distribution head according to one of the preceding claims, wherein the distributor head (2, 4) has at least two different types of openings, and/or wherein the openings are formed as recesses or bores, in particular as bores with curves or chamfers, and/or wherein the openings are arranged radially and/or on circular arcs and/or flat.

12. Distribution head according to one of the preceding claims, wherein the aperture-free region (7, 5, 11, 13, 17, 21) is at least partially radially aligned and/or wherein at least one aperture-free region (7, 11, 13, 21) is continuous up to the center of the product jet.

13. Vapor infusion system comprising a vapor infusion container (1, 24, 28) for heating a liquid product, in particular a liquid food product, and a distributor head (2, 4) according to one of the preceding claims for introducing the product into the vapor infusion container (1, 24, 28).

14. System for ultra-high heating a liquid product, in particular a liquid food product, comprising a vapor infusion system according to the preceding claim for ultra-high heating the product and a filling system (26) for the product arranged downstream of the vapor infusion system.

15. Method for heating a liquid product, in particular a liquid food product, **characterized in that** a distribution head according to any one of claims 1 to 12 is used to introduce the product into a vapour infusion container (1, 24, 28), the method optionally being carried out in a vapour infusion system according to claim 13 and/or a system for ultra-high heating of a liquid product according to claim 14.

## Revendications

1. Tête de distribution (2, 4) pour introduire un produit liquide, en particulier un produit alimentaire liquide, dans un récipient d'infusion de vapeur (1, 24, 28), comprenant une ou plusieurs ouvertures (18) pour introduire le produit dans un récipient d'infusion de vapeur (1, 24, 28) sous la forme d'un jet de produit, en particulier d'un jet composé de jets partiels, **caractérisée en ce que** la tête de distribution (2, 4) comprend, dans la zone desdites une ou plusieurs ouvertures (18), au moins une zone exempte d'ouvertures (7, 8, 13, 17, 21) qui est agencée et/ou conçue de telle sorte qu'est formé un jet de produit permettant une entrée de vapeur à l'intérieur du jet de produit perpendiculairement à la direction de déplacement du jet de produit, et dans laquelle une entée de vapeur jusqu'au milieu du jet de produit est possible.

2. Tête de distribution selon la revendication 1, dans laquelle ladite au moins une zone exempte d'ouvertures présente un diamètre d'au moins 15 mm, et en particulier d'au moins 25 mm.

3. Tête de distribution selon l'une des revendications précédentes, dans laquelle ladite au moins une zone exempte d'ouvertures présente un diamètre d'au moins deux fois le diamètre du plus grand cercle pouvant être inscrit dans toutes les ouvertures d'introduction du produit.

4. Tête de distribution selon l'une des revendications précédentes, dans laquelle les ouvertures de la tête de distribution sont agencées en segments (5a-5d, 9a-9d, 12a-12b, 14a-14g, 16, 19a-19d, 20a-20d) qui sont séparés les uns des autres par une ou plusieurs zones exemptes d'ouvertures.

5. Tête de distribution selon l'une des revendications précédentes, dans laquelle un segment (5a-5d, 9a-9d, 12a-12b, 14a-14g, 16, 19a-19d, 20a-20d) comprend au moins deux ouvertures, en particulier au moins quatre ou au moins dix ouvertures.

6. Tête de distribution selon la revendication 5, dans laquelle la distance d'une ouverture à l'ouverture suivante dans un segment (5a-5d, 9a-9d, 12a-12b, 14a-14g, 16, 19a-19d, 20a-20d) est inférieure à la distance entre deux ouvertures séparées par une zone exempte d'ouvertures (7, 8, 13, 17, 21), en particulier inférieure d'un facteur 2 ou plus, par exemple inférieure d'un facteur 5 ou plus.

7. Tête de distribution selon l'une des revendications précédentes, dans laquelle deux segments (5a-5d, 9a-9d, 12a-12b, 14a-14g, 16, 19a-19d, 20a-20d) comportent des alimentations en produit séparées.

8. Tête de distribution selon l'une des revendications précédentes, dans laquelle deux segments (5a-5d, 9a-9d, 12a-12b, 14a-14g, 16, 19a-19d, 20a-20d) comportent une alimentation en produit commune, dans laquelle les deux segments (5a-5d, 9a-9d, 12a-12b, 14a-14g, 16, 19a-19d, 20a-20d) sont facultativement agencés diamétralement l'un par rapport à l'autre.

9. Tête de distribution selon l'une des revendications précédentes, dans laquelle les segments (5a-5d, 9a-9d, 12a-12b, 14a-14g, 16, 19a-19d, 20a-20d) sont agencés symétriquement les uns par rapport aux autres, en particulier selon une symétrie centrale ou une symétrie axiale.

10. Tête de distribution selon l'une des revendications précédentes, dans laquelle les segments (5a-5d, 9a-9d, 12a-12b, 14a-14g, 16, 19a-19d, 20a-20d) sont intégrés dans une plaque de base commune, dans laquelle la tête de distribution (2, 4) ou la plaque de base peut facultativement être agencée dans la tête du récipient d'infusion.

11. Tête de distribution selon l'une des revendications précédentes, dans laquelle la tête de distribution (2, 4) comporte au moins deux types d'ouvertures différents, et/ou dans laquelle les ouvertures sont constituées comme des évidements ou des trous, en particulier sous forme de trous avec des arrondis ou des chanfreins, et/ou dans laquelle les ouvertures sont agencées radialement et/ou sur des arcs de cercle et/ou à plat.

12. Tête de distribution selon l'une des revendications précédentes, dans laquelle la zone exempte d'ouvertures (7, 5, 11, 13, 17, 21) est au moins partiellement alignée radialement et/ou dans laquelle au moins une zone exempte d'ouvertures (7, 11, 13, 21) est continue jusqu'au centre du jet de produit.

13. Système d'infusion de vapeur comprenant un récipient d'infusion de vapeur (1, 24, 28) pour chauffer un produit liquide, en particulier un produit alimentaire liquide, et une tête de distribution (2, 4) selon l'une des revendications précédentes pour introduire le produit dans le récipient d'infusion de vapeur (1, 24, 28).

14. Système de chauffage à ultra-haute température d'un produit liquide, en particulier d'un produit alimentaire liquide, comprenant un système d'infusion de vapeur selon la revendication précédente pour le chauffage à ultra-haute température du produit, ainsi qu'une installation de remplissage (26) pour le produit, agencée en aval du système d'infusion de vapeur.

15. Procédé de chauffage d'un produit liquide, en particulier d'un produit alimentaire liquide, **caractérisé en ce qu'**une tête de distribution selon l'une des revendications 1 à 12 est utilisée pour introduire le produit dans un récipient d'infusion de vapeur (1, 24, 28), dans lequel le procédé est facultativement mis en œuvre dans un système d'infusion de vapeur selon la revendication 13 et/ou un système de chauffage à ultra-haute température d'un produit liquide selon la revendication 14.
